(19) Europäisches Patentamt

European Patent Office

Office européen des brevets

(11) **EP 2 383 999 A1**

(12) **EUROPEAN PATENT APPLICATION**

(43) Date of publication:
**02.11.2011 Bulletin 2011/44**

(51) Int Cl.:
*H04N 7/24* *(2011.01)*

(21) Application number: **10161468.3**

(22) Date of filing: **29.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **IRDETO B.V.**
**2132 LS Hoofddorp (NL)**

(72) Inventor: **Jarnikov, Dmitri**
**5653 JS, Eindhoven (NL)**

(74) Representative: **Tucker, Nigel P. et al**
**Boult Wade Tennant,**
**Verulam Gardens,**
**70 Gray's Inn Road**
**London WC1X 8BT (GB)**

(54) **Controlling an adaptive streaming of digital content**

(57) The invention provides an improved adaptive streaming solution wherein an optimal receiver strategy is created and stored in a client device for controlling the adaptive streaming of digital content. The optimal receiver strategy data is a result of solving a stochastic decision problem using a mathematical model based on a Markov Decision Process and using as an input to the mathematical model one or more properties of an encoder and an beforehand estimation of an available bandwidth of a packet switched network and/or variation characteristics of the available bandwidth over time of the packet switched network, wherein the properties comprise at least one of an encoder type identification and a mathematical model of a decoder input buffer used by the encoder.

Fig.1

EP 2 383 999 A1

# EP 2 383 999 A1

**Description**

FIELD OF THE INVENTION

The present invention relates to adaptive streaming of digital content. More specifically the invention relates to methods for controlling an adaptive streaming of digital content in a system, in a client device and in a server, and to a system, a client device and a server for controlling an adaptive streaming of digital content.

BACKGROUND

Delivering multimedia content via the Internet, such as e.g. Internet TV or IPTV (i.e. television using the Internet protocol), differs from distribution via broadcast channels, such as e.g. satellite or cable broadcast, by the absence of quality of service guarantees. To compensate for the absence of quality of service guarantees, adaptive-streaming protocols may be used, such as e.g. Smooth Streaming from Microsoft or HTTP Live Streaming from Apple. Recent developments of Internet TV and IPTV solutions extend to Mobile TV and home-network offering where the use of adaptive streaming protocols has gained importance.

The concept of adaptive streaming describes that the same content can be encoded into multiple copies (also called quality levels) with different bit-rates, spatial resolution and/or other encoding characteristics. Each copy typically consists of two-to five-seconds segments called chunks that are physically separated (e.g. a file is created for each chunk in a copy) or logically separated (e.g. all chunks of a copy are stored in a single file with an addressing structure that allows to access any chunk individually). A protocol allows a client to request a data chunk from one of several quality levels at run-time to react to varying network conditions. The decision-making process on the client device is the common denominator for existing adaptive streaming protocols and it represents a major challenge for creating an optimal adaptive streaming solution. A responsibility of the client is to observe the changing network conditions, predict transmission time for the next chunk from different quality levels and choose the quality level that minimizes the risk of late chunk delivery while keeping the quality level as high as possible.

A difficulty to predict the transmission time of a chunk comes from two aspects of multimedia streaming: video codec properties and network properties. Known adaptive streaming solutions prescribe that the video files are encoded at a given constant bit-rate (CBR). For most codecs, however, the resulting bit-rate is different from the target bit-rate. Constant bit-rate video encoding implies that a video encoder with a rate control algorithm tries to continuously maintain a given target average bit-rate. However, this does not necessarily mean that every frame that is being encoded needs to be of the same size. On the contrary, the bit budget may vary per frame in order to enhance the rate-distortion performance of the encoded video. Known codecs produce chunks of different sizes even under constant bit-rate encoding.

Pixel variation and an amount of motion in a video frame are indicators of how difficult it is to encode a frame. As the encoding difficulty increases, a rate controller needs to spend more bits on the frame in order to maintain a decent (not necessarily constant) level of quality measured in terms of peak signal-to-noise ratio (PSNR). A rate control algorithm requires the target bit-rate value as its input, and the output is a video frame sequence, whose bit-rate fluctuates around the target bit-rate in a rate-distortion optimized way.

Known encoders typically maintain a mathematical model of the decoder input buffer. This enables the encoders to guarantee continuous playback of the video at the receiving side given a fixed target encoding rate, a fixed channel throughput and the decoder buffer size. For example, a hypothetical reference decoder (HRD) and video buffering verifier (VBV) models are used by AVC/H.264 and MPEG encoders, respectively.

The HRD and the VBV schemes are based on a leaky bucket model, and they assume that the video to be streamed is drained by a CBR channel with a rate equal to the video encoding rate. HRD and VBV try to avoid possible buffer underflows and buffer overflows caused by implicit bit-rate variations in the encoded bitstream. At the encoder, the leaky bucket model simulates that the bits arrive at the input buffer of the decoder continuously and at a constant rate, complying to the constant bit-rate channel assumption. On the other hand, the bits are removed from the decoder input buffer at a varying rate, depending on the size of the current frame to be decoded.

The fixed channel rate assumption of the HRD and VBV models holds only if the network infrastructure provides guaranteed quality-of-service (QoS), which is rarely the case. In practice the channel throughput may not be constant bit rate and may vary over time, due to competing traffic, changing to a different routing path, or switching between different content sources. This may cause increased data delays or even data loss over the network. As a result the decoder buffer may underflow or overflow, leading to unwanted pauses and noticeable perceptual quality loss during video playback.

Internet TV is typically delivered over an unmanaged network, e.g. an Internet connection between a content server and a client device at a consumer. Internet TV typically has no end-to-end QoS guarantees. A content delivery network (CDN) and/or peer-to-peer (P2P) may be used to distribute content from the content server to a set of edge-servers that relay content to the client devices. Although the connection between the content server and an edge server typically offers a QoS guarantee, the connection between an edge server and the client device typically has no QoS. This is known as a last mile problem.

IPTV is typically delivered over a managed network, e.g. an ADSL line from an internet service provider (ISP) to a client device at a consumer, which is fully controlled by the ISP. IPTV, in theory, has a controlled delivery environment, thus, in theory, providing QoS guarantees. In reality, however, there is a last mile problem.

There is a need for an improved adaptive streaming solution for network infrastructures that cannot guarantee an end-to-end QoS.

## SUMMARY OF THE INVENTION

It is an object of the invention to provide for an improved adaptive streaming solution for network infrastructures that cannot guarantee an end-to-end QoS.

According to an aspect of the invention a method is proposed for controlling an adaptive streaming of digital content in a system. The system comprises an encoder for encoding the digital content and a server for transmitting the digital content to a client device via a packet switched network. The method comprises obtaining one or more properties of the encoder. The properties comprise at least one of an encoder type identification, a mathematical model of a decoder input buffer used by the encoder and bit allocation characteristics and/or rate control characteristics of the encoder. The method further comprises estimating an available bandwidth of the packet switched network and/or variation characteristics of the available bandwidth over time of the packet switched network to obtain network properties data. The method further comprises defining a stochastic decision problem using a mathematical model based on a Markov Decision Process and using as an input to the mathematical model the obtained properties of the encoder and the network properties data. The method further comprises solving the stochastic decision problem to obtain optimal receiver strategy data. The method further comprises storing the optimal receiver strategy data in the client device to control the adaptive streaming of the digital content from the server to the client device.

According to an aspect of the invention a method is proposed in a client device for controlling an adaptive streaming of digital content. The digital content is encoded by an encoder and originates from a server via a packet switched network. The client device comprises a receiver that is communicatively connected to a controller and to a buffer. The client device further comprises a decoder that is communicatively connected to the buffer. The method comprises receiving in the receiver a chunk of data of the digital content. The method further comprises storing the chunk of data in the buffer for further processing by the decoder. The method further comprises estimating an available bandwidth of the packet switched network to obtain estimation data. The method further comprises providing the estimation data to the controller. The method further comprises signaling from the controller to the receiver a quality level of a next chunk of data. The method further comprises transmitting to the server a request for the next chunk of data conforming the quality level. The method further comprises receiving optimal receiver strategy data and storing the optimal receiver strategy data in the controller. The optimal receiver strategy data is a result of solving a stochastic decision problem using a mathematical model based on a Markov Decision Process. The stochastic decision problem further uses as an input to the mathematical model one or more properties of the encoder and an beforehand estimation of an available bandwidth of the packet switched network and/or variation characteristics of the available bandwidth over time of the packet switched network. The properties comprise at least one of an encoder type identification, a mathematical model of a decoder input buffer used by the encoder and bit allocation characteristics and/or rate control characteristics of the encoder. The method further comprises calculating in the controller the quality level of the next chunk of data based on the optimal receiver strategy data and the estimation data.

According to an aspect of the invention a method is proposed in a server for controlling an adaptive streaming of digital content. The digital content is encoded by an encoder. The server is communicatively connected to a client device via a packet switched network. The method comprises obtaining one or more properties of the encoder. The properties comprise at least one of an encoder type identification, a mathematical model of a decoder input buffer used by the encoder and bit allocation characteristics and/or rate control characteristics of the encoder. The method further comprises estimating an available bandwidth of the packet switched network and/or variation characteristics of the available bandwidth over time of the packet switched network to obtain network properties data. The method further comprises defining a stochastic decision problem using a mathematical model based on a Markov Decision Process and using as an input to the mathematical model the obtained properties of the encoder and the network properties data. The method further comprises solving the stochastic decision problem to obtain optimal receiver strategy data. The method further comprises transmitting the optimal receiver strategy data from the server to the client device to configure the client device to control the adaptive streaming of the digital content from the server to the client device.

According to an aspect of the invention a system is proposed for controlling an adaptive streaming of digital content. The system comprises an encoder for encoding the digital content. The system further comprises a server for transmitting the digital content to a client device via a packet switched network. The server comprises a processor configured to obtain one or more properties of the encoder. The properties comprise at least one of an encoder type identification, a mathematical model of a decoder input buffer used by the encoder and bit allocation characteristics and/or rate control characteristics of the encoder. The processor is further configured to estimate an available bandwidth of the packet switched network and/or variation characteristics of the available bandwidth over time of the packet switched network to obtain network properties data. The processor is further configured to define a stochastic decision problem using a mathematical model based on a Markov Decision Process and using as an input to the mathematical model the obtained properties of the encoder and the network properties data. The processor is further configured to solve the stochastic decision problem to obtain optimal receiver strategy data. The server further comprises a transmitter configured to transmit the optimal receiver strategy data to the client device. The client device is configured to receive and store the optimal receiver strategy data to control the adaptive streaming of the digital content from the server to the client device.

According to an aspect of the invention a client device is proposed for controlling an adaptive streaming of digital content. The digital content is encoded by an encoder and originates from a server via a packet switched network. The client device comprises a receiver that is communicatively connected to a controller and to a buffer. The client device further comprises a decoder that is communicatively connected to the buffer. The receiver is configured to receive optimal receiver strategy data and store the optimal receiver strategy data in the controller. The receiver is further configured to receive a chunk of data of the digital content. The receiver is further configured to store the chunk of data in the buffer for further processing by the decoder. The receiver is further configured to estimate an available bandwidth of the packet switched network to obtain estimation data. The receiver is further configured to provide the estimation data to the controller. The receiver is further configured to transmit to the server a request for a next chunk of data conforming a quality level. The controller is configured to calculate the quality level of the next chunk of data based on the optimal receiver strategy data and the estimation data. The controller is further configured to signal to the receiver the quality level of the next chunk of data. The optimal receiver strategy data is a result of solving a stochastic decision problem using a mathematical model based on a Markov Decision Process and using as an input to the mathematical model one or more properties of the encoder and an beforehand estimation of an available bandwidth of the packet switched network and/or variation characteristics of the available bandwidth over time of the packet switched network. The properties comprise at least one of an encoder type identification, a mathematical model of a decoder input buffer used by the encoder and bit allocation characteristics and/or rate control characteristics of the encoder.

According to an aspect of the invention a server is proposed for controlling an adaptive streaming of digital content. The digital content is encoded by an encoder. The server is communicatively connected to a client device via a packet switched network. The server comprises a processor configured to obtain one or more properties of the encoder. The properties comprise at least one of an encoder type identification, a mathematical model of a decoder input buffer used by the encoder and bit allocation characteristics and/or rate control characteristics of the encoder. The processor is further configured to estimate an available bandwidth of the packet switched network and/or variation characteristics of the available bandwidth over time of the packet switched network to obtain network properties data. The processor is further configured to define a stochastic decision problem using a mathematical model based on a Markov Decision Process and using as an input to the mathematical model the obtained properties of the encoder and the network properties data. The processor is further configured to solve the stochastic decision problem to obtain optimal receiver strategy data. The server further comprises a transmitter configured to transmit the optimal receiver strategy data to the client device to configure the client device to control the adaptive streaming of the digital content from the server to the client device.

Thus, the client device estimates an available bandwidth (not to be confused with the beforehand estimation of the available bandwidth to obtain the network properties data, which is typically estimated before transmission of the chunks of data to the client device) and switches between quality levels to maximize the user-perceived quality in the long run. Switching between the quality levels is controlled by the optimal receiver strategy, which is a result of solving the Markov Decision Process based stochastic decision problem with as input the encoder properties and network properties. Thus, network bandwidth fluctuations as well as coding variations can be handled in a digital content stream transmitted from the server to the client device. Moreover, the thus provided adaptive streaming solution is independent of quality of service mechanisms of the packet switched network.

The embodiment of claim 2 enables the optimal receiver strategy to be updated when e.g. encoder properties or network characteristics have changed.

According to an aspect of the invention a computer program element is proposed, which, when being executed by a processor, is adapted to carry out a method for use in a client device having one or more of the above described features.

This enables the client device to implement the adaptive steaming solution as a software module.

According to an aspect of the invention a computer program element is proposed, which, when being executed by a processor, is adapted to carry out a method for use in a server having one or more of the above described features.

This enables the optimal receiver strategy to be created in a software module running in the server.

Hereinafter, embodiments of the invention will be described in further detail. It should be appreciated, however, that these embodiments may not be construed as limiting the scope of protection for the present invention.

BRIEF DESCRIPTION OF THE DRAWINGS

Aspects of the invention will be explained in greater detail by reference to exemplary embodiments shown in the drawings, in which:

Fig.1 shows a client device of an exemplary embodiment of the invention;
Fig.2 shows a graphical representation of an example of cumulative distribution functions for three quality levels;
Fig.3 shows a graphical representation of an example of a computed optimal receiver strategy;
Figs.4, 5a-c and 6a-6c show a graphical representation of a comparison of algorithms of an exemplary embodiment of the invention;
Fig.7 shows a system of an exemplary embodiment of the invention;
Fig.8 shows a server of an exemplary embodiment of the invention;
Fig.9 shows a method in a system of an exemplary embodiment of the invention;
Fig.10 shows a method in a server of an exemplary embodiment of the invention; and
Fig.11 shows a method in a client device of an exemplary embodiment of the invention.

DETAILED DESCRIPTION OF THE DRAWINGS

In order to provide a good quality adaptive streaming experience, the system ideally understands current network conditions (i.e. not only the available bandwidth, but also its variation over time) and switches to the optimal video quality level dynamically. It is desirable that the system avoids frequent changes in the quality of the delivered video (i.e. minimizes quality fluctuations) that lead to a considerable drop in the user-perceived quality.

To address the aforementioned challenges, a sophisticated algorithm is proposed that performs bandwidth measurements and switches between quality levels trying to maximize the user-perceived quality in the long run. Thus, network bandwidth fluctuations as well as coding variations can be handled in a content stream transmitted from a server to a client device or receiver via a network. The server is e.g. a media server of headend system. The client device is e.g. a computer device, interactive television, Internet-enabled television set, IPTV receiver, set-top box, mobile TV device or smartphone. The network is typically an IP network, but can be any other packet switched network.

Bandwidth variations can be short-term and/or long-term. During long-term variations, the bandwidth is equal to a certain average over a significant period of time (seconds or, even, minutes) with insignificant changes around the average. During short-term variations, the bandwidth deviates significantly from the average, but such deviations are typically short lived (milliseconds, seconds). For each distinguishable network conditions, a strategy is calculated to switch between quality levels. Hereto a Markov Decision Process (MDP) is formulated based on predicted and/or observed properties of encoders and based on predicted and/or observed properties of the network. The MDP is solved in order to obtain one or more optimal receiver strategies. The strategies are sent to the receiver or downloaded by the receiver for use in adaptive streaming and decoding of the content.

An example of a property of the encoder is an encoder type identification. This identification may be used to lookup characteristics of the encoder. Another example of a property of the encoder is a mathematical model of a decoder input buffer used by the encoder. Other examples of properties of the encoder are bit allocation characteristics and/or rate control characteristics of the encoder.

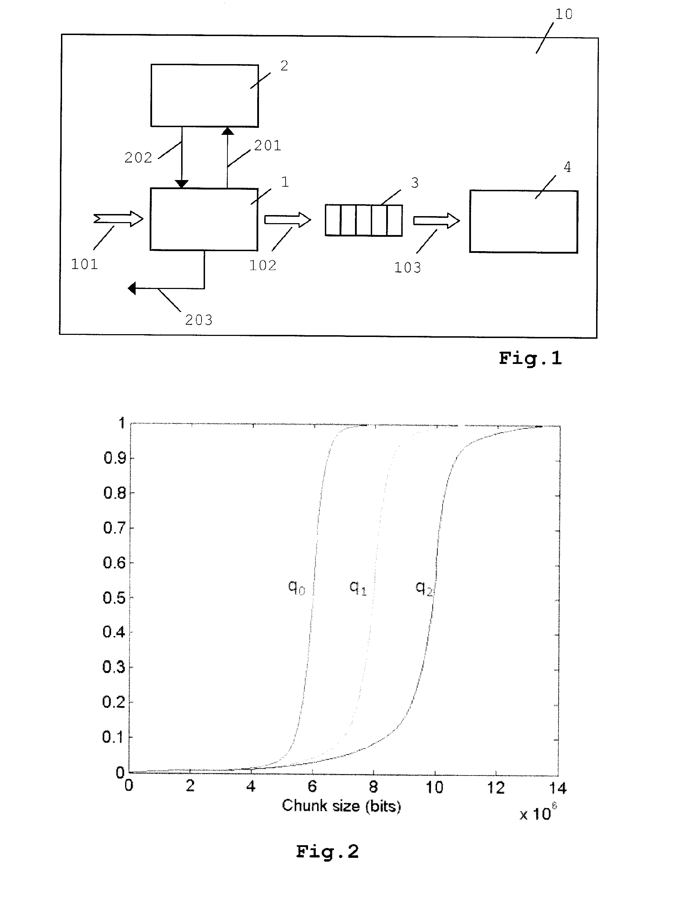

Fig.1 shows the basic functional elements of a client device 10 of an exemplary embodiment of the invention. A receiver module 1 communicates with an external server for requesting and receiving content data 101. The receiver module 1 is furthermore configured to estimate the available bandwidth, typically based on the size of the downloaded content data and the duration of its transmission. The received data 102 is stored in a buffer 3 and further processed by a decoder 4 or any other video processing application/module. Data read from the buffer 3 and provided to the decoder 4 is depicted by arrow 103.

Estimation data 201 representing the estimated available bandwidth is provided by the receiver module 1 to a controller 2. The controller 2 signals to the receiver 1 at what quality level the next chunk should be, as depicted by arrow 202. Typically, every chunk belongs to a particular quality level. Hereby the controller changes the quality level of the receiver in such way that a chunk can be successfully received within a given time period.

A number of chunks of the content data can be buffered by the client device 10, thereby compensating for drops in network throughput. This method requires that the receiver 1 requests the next chunk, depicted by arrow 203, from the external server immediately after the current chunk is received. Buffering is possible when the next chunk is available at the external server and there is free space in the receiver buffer 3. Although it is possible that a next chunk is not available, for simplicity in this example the external server always has the next chunk available, so the buffer fullness on the client side is the only limiting factor. If the buffer is full, the receiver is put on hold until the buffer 3 has sufficient space to accommodate the next chunk.

The client device 10 typically has limited buffering space and is typically used in real-time content delivery systems implying a low start-up latency requirement. The amount of buffering is e.g. limited to 5-10 seconds corresponding to 2 or 3 chunks of content data.

The client buffer 3 is kept as full as possible to be able to accommodate a possible oversized chunk or a drop in the network throughput. Requesting chunks (depicted by 203) at a low quality decreases transmission time leaving more reserve time available to transmit following chunks.

The controller 2 is configured to decide how much time should stay available in the reserve. A bigger reserve allows handling of a sudden increase in bandwidth consumption, whereas a smaller reserve allows processing of a larger number of chunks at the higher quality.

The controller 2 is further configured to take into account that frequent jumps between high and low quality levels can be more annoying to end-users than staying at a low quality level for a substantial amount of time.

Thus, the strategy of the controller 2 is to signal the receiver 1 to request chunks of the highest possible quality level, so as to keep the quality of decoded video high; to avoid requesting more data than that could be timely transmitted under current network conditions to prevent delays in displaying the video; and to keep the number of quality-level changes low, so the user is not annoyed by quality fluctuations.

Immediately after a chunk has been received in the receiver 1, the controller 2 has to determine a quality level at which the next chunk is to be requested by the receiver 1. The quality level determined by the controller 2 is typically one of a set of quality levels corresponding to a set of quality levels available at the external server.

When choosing a quality level, one or more of the following objectives are balanced to maximize the perceived quality. A first objective is that the number of deadline misses should be as low as possible. Missing a deadline means that the corresponding chunk is not displayed on time, which results in a severe drop in the perceived quality of the video in general. A second objective is that the number of quality changes should be as low as possible. A third objective is that the average perceptual quality at the client side should be as high as possible.

To meet the objectives a stochastic decision problem is defined using a mathematical model based on a Markov Decision Process (MDP).

A control strategy using a MDP is e.g. known from Clemens C. Wüst and Wim F.J. Verhaegh, "Quality control for scalable media processing applications," J. of Scheduling, vol.7, no.2, pp.105-117, 2004*,* which is incorporated by reference in its entirely in the present application. The MDP control strategy minimizes both the number of deadline misses and the number of quality level changes, while maximizing the quality level. Its approach is based on a MDP that may be solved off-line, after which the calculated optimal control strategy is applied online to control a decoding algorithm.

The controller 2 of the present invention applies a modified MDP model to control the receiver 1 on the client device 10 in an adaptive streaming environment. Adaptive streaming enables making trade-offs between user perceived quality and network resources. The client-side controller 2 optimizes the perceived quality with respect to the available network bandwidth. The controller 2 does not depend on the type of adaptive streaming and thus, can be used with any known adaptive streaming technique.

The moment at which the reception of a chunk has been stopped (either finished or aborted) is referred to as a milestone. Every milestone 'm' has a completion time '$c_m$', that is the time at which the reception of the chunk is stopped, and a deadline at time '$d_m$', that is the point at which the corresponding chunk is needed for the decoder. The deadlines are strictly periodic. Period $T^p$ is the time between two successive deadlines.

At each milestone the controller calculates the relative progress, defined as the fraction of the time remaining until the deadline of the milestone. There is an upper bound on the relative progress that defines the maximum number of chunks that can be buffered. The deadline of milestone number m may be denoted as:

$$d_m = d_0 + m \cdot T^P,$$

where $d_0$ is an offset that defines the time of the first deadline.

The relative progress $\rho_m$ at milestone m may be expressed by the following equation:

$$\rho_m = \frac{d_m - c_m}{T^P} = m - \frac{c_m - d_0}{T^P}.$$

If the relative progress at the $(m+1)^{th}$ milestone drops below zero, then $\lceil -\rho_m \rceil$ (the next larger integer to $-\rho_m$) deadline misses have occurred since the $m^{th}$ milestone (for example, one deadline is missed if $0 < -\rho_m \leq 1$).

The deadline misses are typically processed in the following way. If at the deadline for milestone m the chunk reception is not completed, the receiver aborts reception of the chunk. This approach, however, does not necessarily mean that all the information that is received so far is lost. An unfinished transmission may be considered as a deadline miss, despite the fact that some information can be used further. With this approach the minimum relative progress is 0.

A state of the system, which is typically the first element of MDP, at the milestone m is the relative progress interval, denoted by $\Pi_k$ ($0 \leq k \leq n-1$), and the quality level previously used, denoted by $q_m$. The relative progress range is partitioned into a finite set of equal-sized progress intervals, to obtain a finite number of states.

For the transition probabilities, i.e. another element of MDP, we need to calculate the probability of a transition from a state i at the current milestone m to a state j at the next milestone m + 1 , when quality level q is chosen. The calculation of transition probabilities assumes that the budget is equal to the period $_T^P$.

The final element of MDP is a revenue function that defines rewards and/or penalties of choosing a particular action in a state (i.e., choosing a quality level).

The solution of an MDP is given by a decision strategy that maximizes the average revenue per transition. A successive approximation solution technique is used to solve the MDP. The strategy calculation is typically done off-line. The resulting optimal receiver strategy is stored in the client device for controlling the adaptive streaming from the client device.

For the full definition of MDP, the cumulative distribution function (CDF) Fq of variable $X_q$, which represents transmission time for a chunk at a particular quality level q, is estimated. The statistics are gathered off-line by measuring sizes of chunks of a particular duration from the various video inputs and dividing the measured values by the bandwidth that the calculated strategy will be used for.

To illustrate the invention, in the following example an evaluation is shown of adaptive streaming of two high definition video sequences using three different tests. As input for the evaluation, encoding statistics of the two high-definition video sequences are used. The first video is 10 hours long and is used as an input to the MDP model; the second video is 2 hours long and is used as a test sequence to evaluate strategies created with the MDP model. The video sequences are encoded using a x264 video encoder into three quality levels with bit-rates of 1 Mbps (quality level $q_0$), 2 Mbps (quality level $q_1$) and 3 Mbps (quality level $q_2$).

In this example the duration of a chunk is 2 seconds, video sequences are split in chunks and trace files are created for recording sizes of all chunks. The trace files contain size measurements for chunks from different quality levels.

Fig. 2 shows a graphical representation of CDFs of the 2-seconds chunks for the three quality levels $q_0$, $q_1$, and $q_2$ of the example. On the x-axis the chunk size in bits is plotted. On the y-axis the cumulative probability that a chunk has a size less than or equal to the chunk size is plotted. The CDFs are used as an input for the MDP to determine transition probabilities.

Three tests are performed with different assumptions regarding the network behavior: 'fixed', 'fluctuating' and 'changing'

For the 'fixed' test the network bandwidth stays the same during transmission of all chunks at bit-rate b (i.e. differences in chunk transmission times are solely caused by differences in chunk sizes). In practice, however, having a constant network bandwidth for the whole duration of transmission is not feasible. Even though the majority of IPTV and Internet TV systems almost never experience frequent loss, duplication, or reordering of packets during transmission because of the use of managed networks, data packets may be delayed due to multiple traffic flows contending for the same path. The 'fixed' test shows delays as the major reason for bandwidth variations.

The 'fluctuating' and 'changing' tests evaluate system performance under changing network conditions. A normal distribution and uniform distribution of available bandwidth are assumed. For the 'fluctuating' test the bandwidth value is chosen from a normal distribution N(b,b/10) but limited to positive values. For the 'changing' test the bandwidth value is chosen from uniform distribution U(b-b/10,b+b/10). In both tests, the bandwidth value changes for every chunk.

For all three tests one strategy is calculated per each value of b from 2.25 Mbps to 6 Mbps with a step of 0.25 Mbps. Trace files are used for chunk sizes and bandwidth values generated in accordance to the test conditions (single value for the 'fixed' test and a set of 1000 values for the 'fluctuating' and 'changing' tests) to create CDFs of chunk transmission time. The CDFs are used as an input for the MDP to calculate transition probabilities.

In this example, MDP parameters are defined as follows. The upper bound on the relative progress is set to 2, which assumes that up to two transmitted chunks can be work ahead. A reward is defined for being on a particular quality level as 4.2, 4.3, 4.4 for levels $q_0$, $q_1$, and $q_2$, respectively, based on a subjective quality evaluation of the AVC/H.264 codec. In the revenue function, the penalty for missing a deadline is set to 250. The penalties for increasing the quality level are set to 0.125 and 1.25 if the quality level is increased by 1 or 2, respectively. For decreasing the quality level, the penalties are set to 0.25 and 2.5 for going down by 1 or 2 levels, respectively.

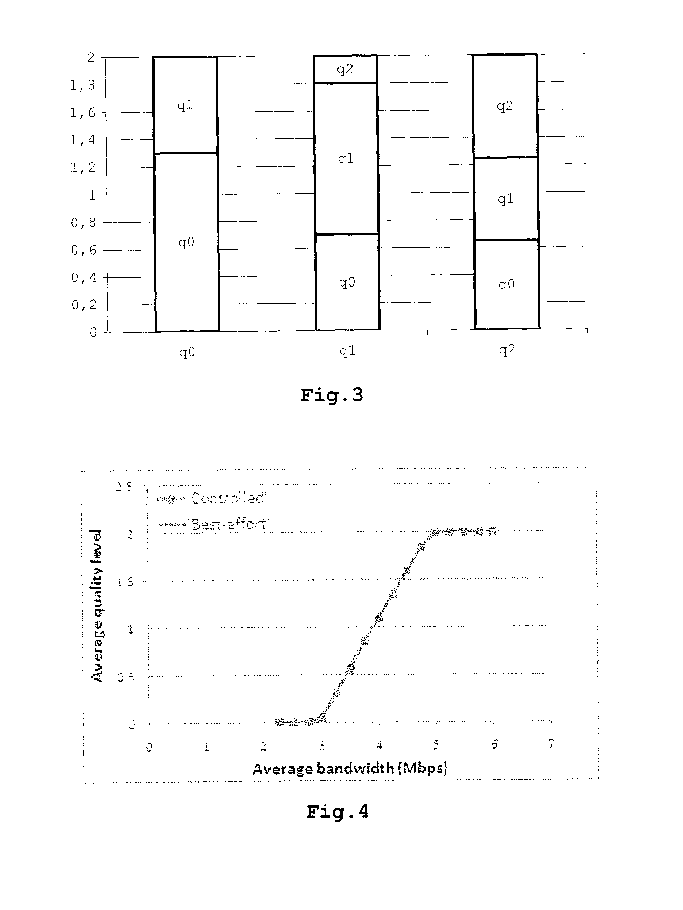

An example of the strategy computed by the MDP is shown in Fig.3. The horizontal axis represents a previous quality level. The vertical axis is for the relative progress values. To choose the quality level for a next chunk, the computed strategy is applied by looking at the column with the previous quality level at the horizontal axis and determine at what part of the column we end up with the current value of the relative progress. The algorithm may be implemented as a simple lookup operation and may be implemented in software.

For the evaluation a 'controlled' algorithm is compared with a 'best-effort' algorithm. The 'controlled' algorithm follows the strategy computed with MDP as shown in Fig.3. The 'best-effort' algorithm starts with the lowest quality level and then complies with the following strategy: if the buffer fullness is less than 1/3 and the current quality level is not $q_0$, decrease the quality level; if the buffer fullness is more than 2/3 and the current quality level is not $q_2$, increase the quality level; otherwise, keep the same quality level.

Given the possible quality levels of 0, 1 and 2 for $q_0$, $q_1$, and $q_2$, respectively, the average quality level achieved by both algorithms in all three tests ('fixed', 'fluctuating' and 'changing') are nearly identical for the 'fixed' network test, as depicted in Fig.4.

There are, however, other determining factors than average quality in comparing the performances of the two algorithms, namely, the percentage of chunks that miss their deadlines and the number of quality level changes, for which the 'best-effort' algorithm is outperformed by the proposed 'controlled' algorithm.

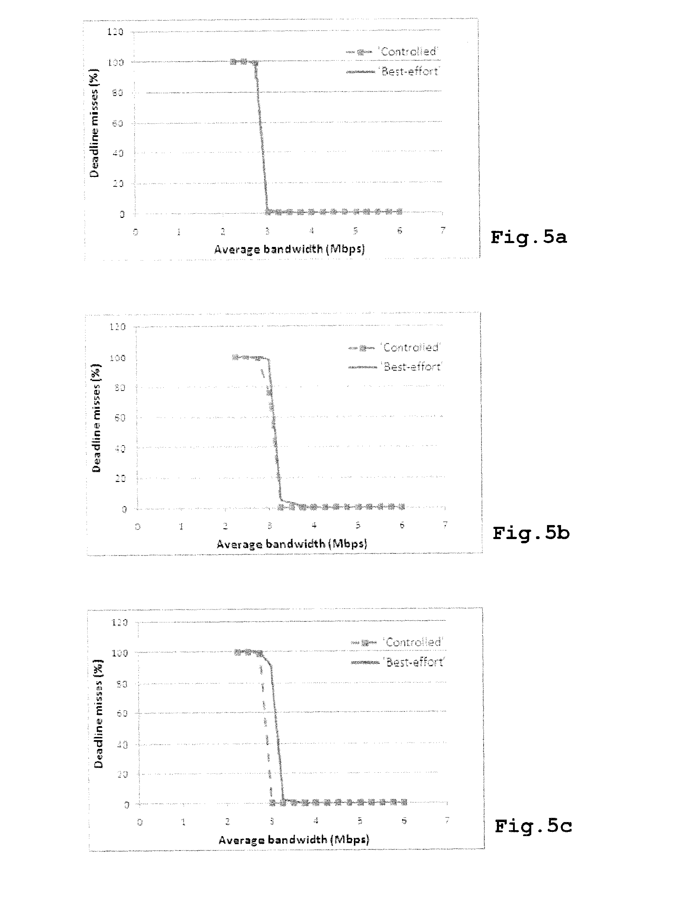

Fig.5a shows the percentage of the deadline misses as a function of the average bandwidth for both algorithms in the 'fixed' test. Fig.5b shows the percentage of the deadline misses as a function of the average bandwidth for both algorithms in the 'fluctuating' test. Fig.5c shows the percentage of the deadline misses as a function of the average bandwidth for both algorithms in the 'changing' test.

As shown in Fig.5a, the algorithms perform almost identical for all bandwidth values in the 'fixed' test, whereas, as shown in Fig.5b and Fig.5c, in the 'fluctuating' and 'changing' tests the 'controlled' algorithm outperforms the 'best-effort' algorithm. This can be explained as follows.

With a fixed bandwidth the transmission times of chunks differ significantly between quality levels, and a change of the quality level almost guarantees a significant change in the transmission time. Therefore, when the client-device buffer 3 gets empty, the algorithms simply decrease the quality level for avoiding a deadline miss. In the 'fluctuating' and 'changing' tests there is a chance that decreasing of the quality level may coincide with a drop in the available bandwidth, thus making an effect of such step less pronounced. The 'controlled' algorithm is prepared for such a situation and executes a more conservative strategy.

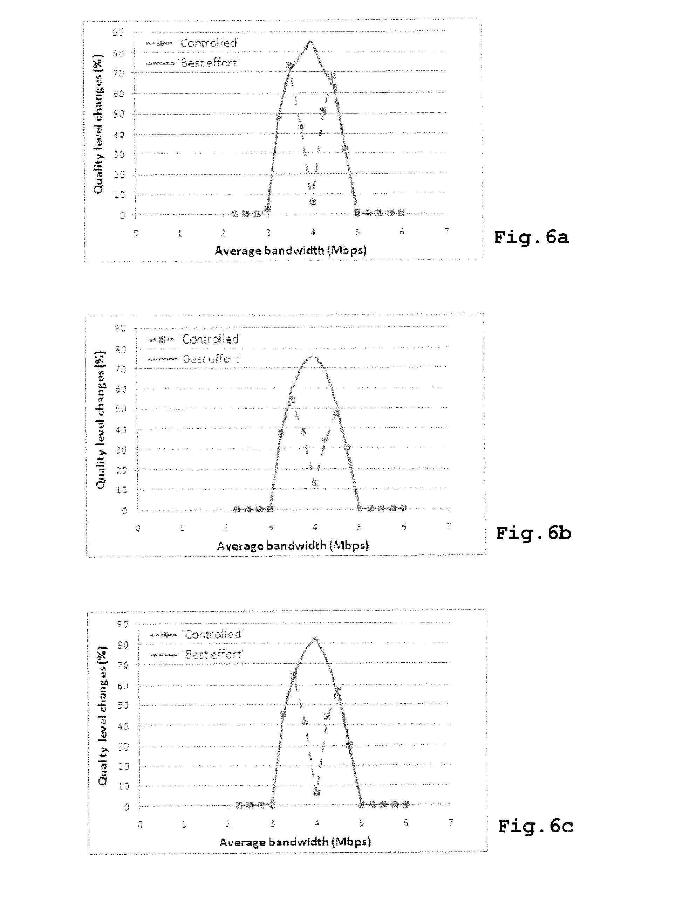

Fig.6a depicts the number of quality level changes versus the average bandwidth for both algorithms in the 'fixed' test. Fig.6b depicts the number of quality level changes versus the average bandwidth for both algorithms in the 'fluctuating' test. Fig.6c depicts the number of quality level changes versus the average bandwidth for both algorithms in the 'changing' test.

Figs.6a-6c show that in the 'fixed, 'fluctuating' and 'changing' tests the number of quality level changes is considerably lower for the 'controlled' algorithm.

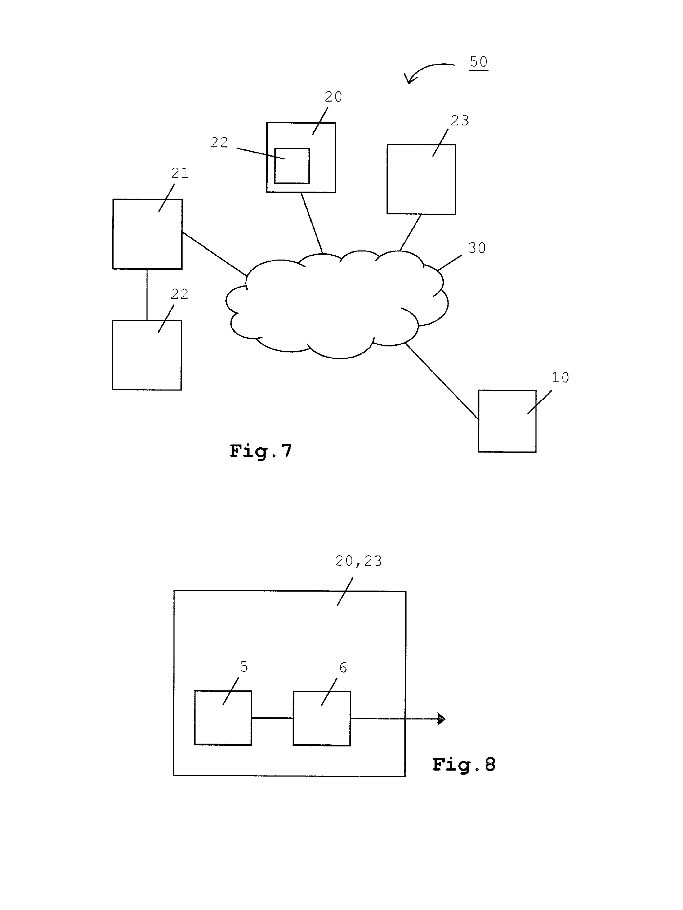

Fig.7 shows a simplified system 50 of an exemplary embodiment of the invention, such as used for Internet TV or IPTV. A server 20 is connected to one or more client devices 10 via a packet switched network 30. An encoder 22 encodes a digital content stream before transmission of the digital content stream from the server 20 to the client device 10. The encoder may be external to the server 20, e.g. at a content source of a third party, or internal to the server 20, e.g. when the content is stored in the server 20.

The optimal receiver strategy may be calculated in the server 20 and transmitted from the server 20 to the client device 10. This enables the optimal receiver strategy to be updated when e.g. encoder properties or network characteristics have changed. Alternatively, the optimal receiver strategy is calculated in another server 23 not involved in the transmission of the digital content. This server 23 may transmit the optimal receiver strategy to the client device 10 directly or via the server 20. It is possible that the optimal receiver strategy is calculated off-line an preloaded in the client device 10.

Fig.8 shows a server 20, 23 of an exemplary embodiment of the invention that is configured to calculate the optimal receiver strategy using a processor 5 and transmit the optimal receiver strategy to a client device 10 using a transmitter 6.

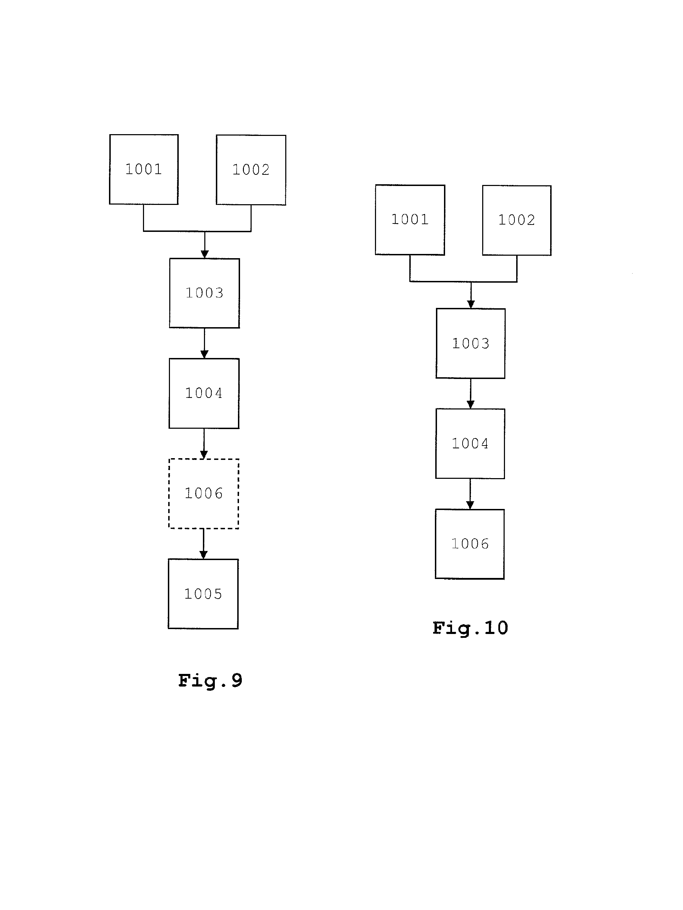

Fig.9 shows a method in a system 50 of an exemplary embodiment of the invention, such as an Internet TV or IPTV system. The method comprises obtaining 1001 the properties of the encoder and estimating 1002 the network properties. The encoder properties and network properties are used to define 1003 the MDP model. The MDP is solved 1004 and the resulting optimal receiver strategy is stored 1005 in the controller 2 of to the client device 10. Optionally, if the optimal receiver strategy is created in the server 20,23, the server 20,23 transmits 1006 the optimal receiver strategy to the client device 10. The order of blocks 1001-1005 may be different than shown in Fig.9. E.g. 1001 and 1002 may be performed one after the other.

Fig.10 shows a method in a server 20 of an exemplary embodiment of the invention. The method comprises obtaining 1001 the properties of the encoder and estimating 1002 the network properties. The encoder properties and network properties are used to define 1003 the MDP model. The MDP is solved 1004 and the resulting optimal receiver strategy is transmitted 1006 to the client device 10. The order of blocks 1001-1005 may be different than shown in Fig. 10. E.g. 1001 and 1002 may be performed one after the other.

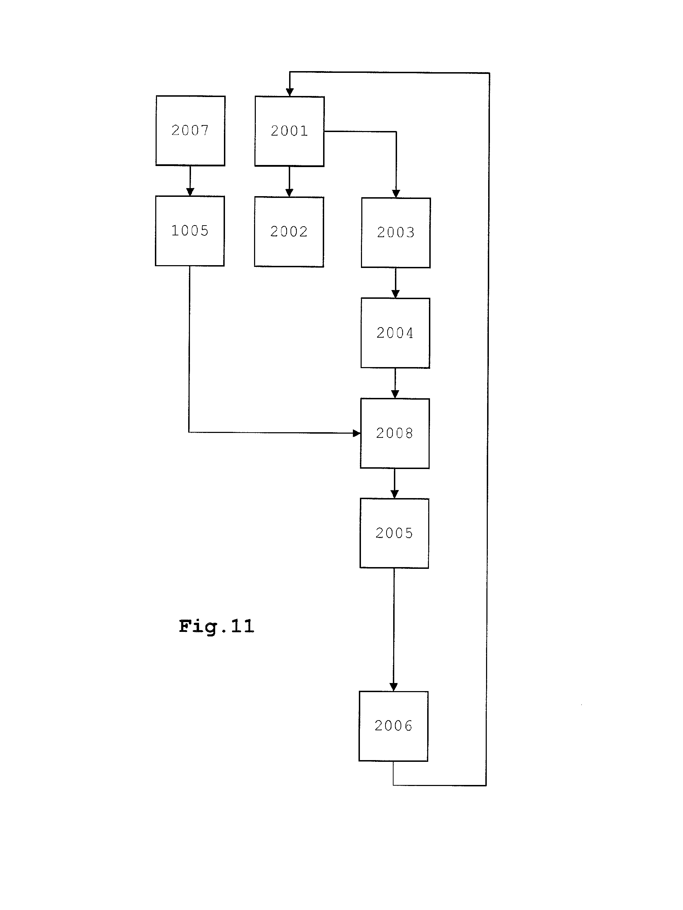

Fig.11 shows a method in a client device 10 of an exemplary embodiment of the invention. The receiver 1 of the client device receives 2001 a chunk of data. The chunk of data is stored 2002 in the buffer for further processing by the decoder 4 or any other video processing application/module. The current available bandwidth of the network 30 is estimated 2003 and provided 2004 to the controller 2. The controller calculates 2008 for the next chunk of data what the quality level should be. Hereto the controller uses the optimal receiver strategy that is receiver 2007 and stored 1005 in the controller 2. The calculated quality level is signaled 2005 to the receiver, e.g. by providing data comprising a representation of the quality level. The receiver uses the quality level to transmit 2006 a request for the next chunk of data to the server 20. This request contains the desired quality level as calculated by the controller 2. The order of the blocks may be different than shown in Fig.11, as long as results from a block are available in time for processing in another block.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

## Claims

1. A method for controlling an adaptive streaming of digital content in a system (50) comprising an encoder (22) for encoding the digital content and a server (20) for transmitting the digital content to a client device (10) via a packet switched network (30), the method comprising:

   obtaining one or more properties of the encoder (22), wherein the properties comprise at least one of an encoder type identification, a mathematical model of a decoder input buffer used by the encoder (22) and bit allocation characteristics and/or rate control characteristics of the encoder (22);
   estimating an available bandwidth of the packet switched network (30) and/or variation characteristics of the available bandwidth over time of the packet switched network (30) to obtain network properties data;
   defining a stochastic decision problem using a mathematical model based on a Markov Decision Process and using as an input to the mathematical model the obtained properties of the encoder (22) and the network properties data;
   solving the stochastic decision problem to obtain optimal receiver strategy data; and
   storing the optimal receiver strategy data in the client device (10) to control the adaptive streaming of the digital content from the server (20) to the client device (10).

2. The method according to claim 1, wherein the stochastic decision problem is solved in the server (20), and wherein the method further comprises transmitting the optimal receiver strategy data from the server (20) to the client device (10).

3. A method in client device (10) for controlling an adaptive streaming of digital content, wherein the digital content is encoded by an encoder (22) and originates from a server (20) via a packet switched network (30), wherein the client device (10) comprises a receiver (1) that is communicatively connected to a controller (2) and to a buffer (3), the client device (10) further comprising a decoder (4) that is communicatively connected to the buffer (3), the method comprising:

receiving in the receiver (1) a chunk of data of the digital content;
storing the chunk of data in the buffer (3) for further processing by the decoder (4);
estimating an available bandwidth of the packet switched network (30) to obtain estimation data;
providing the estimation data to the controller (2);
signaling from the controller (2) to the receiver (1) a quality level of a next chunk of data; and
transmitting to the server (20) a request for the next chunk of data conforming the quality level,
the method further comprising:
receiving optimal receiver strategy data and storing the optimal receiver strategy data in the controller (2), wherein the optimal receiver strategy data is a result of solving a stochastic decision problem using a mathematical model based on a Markov Decision Process and using as an input to the mathematical model one or more properties of the encoder (22) and an beforehand estimation of an available bandwidth of the packet switched network (30) and/or variation characteristics of the available bandwidth over time of the packet switched network (30), wherein the properties comprise at least one of an encoder type identification, a mathematical model of a decoder input buffer used by the encoder (22) and bit allocation characteristics and/or rate control characteristics of the encoder (22); and
calculating in the controller (2) the quality level of the next chunk of data based on the optimal receiver strategy data and the estimation data.

4. A method in a server (20,23) for controlling an adaptive streaming of digital content, wherein the digital content is encoded by an encoder (22), and wherein the server (20,23) is communicatively connected to a client device (10) via a packet switched network (30), the method comprising:

obtaining one or more properties of the encoder (22), wherein the properties comprise at least one of an encoder type identification, a mathematical model of a decoder input buffer used by the encoder (22) and bit allocation characteristics and/or rate control characteristics of the encoder (22);
estimating an available bandwidth of the packet switched network (30) and/or variation characteristics of the available bandwidth over time of the packet switched network (30) to obtain network properties data;
defining a stochastic decision problem using a mathematical model based on a Markov Decision Process and using as an input to the mathematical model the obtained properties of the encoder (22) and the network properties data;
solving the stochastic decision problem to obtain optimal receiver strategy data; and
transmitting the optimal receiver strategy data from the server (20,23) to the client device (10) to configure the client device (10) to control the adaptive streaming of the digital content from the server (20) to the client device (10).

5. A system for controlling an adaptive streaming of digital content, comprising an encoder (22) for encoding the digital content and a server (20) for transmitting the digital content to a client device (10) via a packet switched network (30), wherein the server (20) comprises a processor configured to:

obtain one or more properties of the encoder (22),
wherein the properties comprise at least one of an encoder type identification, a mathematical model of a decoder input buffer used by the encoder (22) and bit allocation characteristics and/or rate control characteristics of the encoder (22);
estimate an available bandwidth of the packet switched network (30) and/or variation characteristics of the available bandwidth over time of the packet switched network (30) to obtain network properties data;
define a stochastic decision problem using a mathematical model based on a Markov Decision Process and using as an input to the mathematical model the obtained properties of the encoder (22) and the network properties data; and
solve the stochastic decision problem to obtain optimal receiver strategy data,

wherein the server (20) further comprises a transmitter configured to transmit the optimal receiver strategy data to the client device (10), and
wherein the client device (10) is configured to receive and store the optimal receiver strategy data to control the adaptive streaming of the digital content from the server (20) to the client device (10).

**6.** A client device (10) for controlling an adaptive streaming of digital content, wherein the digital content is encoded by an encoder (22) and originates from a server (20) via a packet switched network (30), the client device (10) comprising:

> a receiver (1) that is communicatively connected to a controller (2) and to a buffer (3); and
> a decoder (4) that is communicatively connected to the buffer (3),

wherein the receiver (1) is configured to:

> receive optimal receiver strategy data and store the optimal receiver strategy data in the controller (2);
> receive a chunk of data of the digital content;
> store the chunk of data in the buffer (3) for further processing by the decoder (4);
> estimate an available bandwidth of the packet switched network (30) to obtain estimation data;
> provide the estimation data to the controller (2); and
> transmit to the server (20) a request for a next chunk of data conforming a quality level,

wherein the controller is configured to:

> calculate the quality level of the next chunk of data based on the optimal receiver strategy data and the estimation data; and
> signal to the receiver (1) the quality level of the next chunk of data,

wherein the optimal receiver strategy data is a result of solving a stochastic decision problem using a mathematical model based on a Markov Decision Process and using as an input to the mathematical model one or more properties of the encoder (22) and an beforehand estimation of an available bandwidth of the packet switched network (30) and/or variation characteristics of the available bandwidth over time of the packet switched network (30), wherein the properties comprise at least one of an encoder type identification, a mathematical model of a decoder input buffer used by the encoder (22) and bit allocation characteristics and/or rate control characteristics of the encoder (22).

**7.** A server (20,23) for controlling an adaptive streaming of digital content, wherein the digital content is encoded by an encoder (22), and wherein the server (20,23) is communicatively connected to a client device (10) via a packet switched network (30), wherein the server (20) comprises a processor (5) configured to:

> obtain one or more properties of the encoder (22),
> wherein the properties comprise at least one of an encoder type identification, a mathematical model of a decoder input buffer used by the encoder (22) and bit allocation characteristics and/or rate control characteristics of the encoder (22);
> estimate an available bandwidth of the packet switched network (30) and/or variation characteristics of the available bandwidth over time of the packet switched network (30) to obtain network properties data;
> define a stochastic decision problem using a mathematical model based on a Markov Decision Process and using as an input to the mathematical model the obtained properties of the encoder (22) and the network properties data; and
> solve the stochastic decision problem to obtain optimal receiver strategy data,
> and wherein the server (20) further comprises a transmitter (6) configured to transmit the optimal receiver strategy data to the client device (10) to configure the client device (10) to control the adaptive streaming of the digital content from the server (20) to the client device (10).

**8.** A computer program element, which, when being executed by a processor, is adapted to carry out a method for use in a client device (10) according to claim 3.

**9.** A computer program element, which, when being executed by a processor, is adapted to carry out a method for use in a server (20,23) according to claim 4.

**Fig.1**

**Fig.2**

Fig.3

Fig.4

Fig.5a

Fig.5b

Fig.5c

Fig.6a

Fig.6b

Fig.6c

Fig.7

Fig.8

Fig.9

Fig.10

Fig.11

Europäisches
Patentamt

European
Patent Office

Office européen
des brevets

## EUROPEAN SEARCH REPORT

Application Number

EP 10 16 1468

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WÜST C ET AL: "Quality level control for scalable media processing applications having fixed CPU budgets" INTERNET CITATION 22 April 2004 (2004-04-22), XP002302672 Retrieved from the Internet: URL:http://www.extra.research.philips.com/publ/nl-ms/r-21.339.pdf [retrieved on 2004-10-22] * the whole document * | 1-9 | INV. H04N7/24 |
| A | JARNIKOV D ET AL: "Adaptable video streaming over wireless networks" COMPUTER COMMUNICATIONS AND NETWORKS, 2005. ICCCN 2005. PROCEEDINGS. 1 4TH INTERNATIONAL CONFERENCE ON SAN DIEGO, CA, USA 17-19 OCT. 2005, PISCATAWAY, NJ, USA,IEEE, 17 October 2005 (2005-10-17), pages 594-594, XP010846155 ISBN: 978-0-7803-9428-5 * the whole document * | 1-9 | |
| A,D | WUEST C C ET AL: "QUALITY CONTROL FOR SCALABLE MEDIA PROCESSING APPLICATIONS" JOURNAL OF SCHEDULING, WILEY, CHICHESTER, GB LNKD- DOI:10.1023/B:JOSH.0000014067.74332.74, vol. 7, 1 January 2004 (2004-01-01), pages 105-117, XP008033472 ISSN: 1094-6136 * the whole document * | 1-9 | **TECHNICAL FIELDS SEARCHED (IPC)** H04N |
| A | NELAKUDITI S ET AL: "Providing smoother quality layered video stream" INTERNET CITATION 9 June 2004 (2004-06-09), XP002283961 [retrieved on 2004-06-09] * the whole document * | 1-9 | |

The present search report has been drawn up for all claims

| Place of search | Date of completion of the search | Examiner |
|---|---|---|
| The Hague | 9 July 2010 | Boubal, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                          
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CLEMENS C. WÜST ; WIM F.J. VERHAEGH.** Quality control for scalable media processing applications. *J. of Scheduling,* 2004, vol. 7 (2), 105-117